# DEMANDE DE BREVET EUROPEEN

(11) **EP 4 644 181 A1**
(43) Date de publication de la demande: **05.11.2025**
(21) Numéro de dépôt: 25170060.5
(22) Date de dépôt: 11.04.2025
(51) Int. Cl.: B60Q 1/068, B60Q 1/04, B60Q 1/26

(54) **AGENCEMENT D'UN DISPOSITIF D'ÉCLAIRAGE ET/OU DE SIGNALISATION SUR UN ÉLÉMENT DE CARROSSERIE D'UN VÉHICULE AUTOMOBILE**

(30) Priorité: 03.05.2024 FR 2404677
(71) Demandeur: Stellantis Auto SAS, 78300 Poissy (FR)
(72) Inventeur: ROBIN, PHILIPPE, 91370 VERRIERES LE BUISSON (FR); JAOUEN, JEAN SEBASTIEN, 91160 LONGJUMEAU (FR)
(74) Mandataire: ESIP

(57) **Abrégé**

Titre de l'invention : Agencement d'un dispositif d'éclairage et/ou de signalisation sur un élément de carrosserie d'un véhicule automobile
Agencement (AG2) d'un dispositif d'éclairage et/ou de signalisation (PRJ) à l'arrière d'un panneau de carrosserie (PAN) d'un véhicule automobile (VHL), ledit panneau délimitant une ouverture (OUV) en regard de laquelle est positionné le dispositif ; ledit dispositif comportant un boitier (BTR) fixé sur la face arrière (FAR) du panneau et une glace (GLA) de forme géométrique déterminée, fermant le boitier et s'étendant au travers de ladite ouverture, présentant la même forme géométrique déterminée ; ledit agencement comportant en outre au moins trois liaisons rotulées réglables (LR1, LR2), agencées entre le boitier et la face arrière du panneau autour de l'ouverture ; lesdites liaisons permettant à la fois la fixation du boitier sur la face arrière du boitier et le réglage du positionnement de la glace au travers de l'ouverture depuis l'arrière du boitier.

## Description

L'invention concerne en général les agencements de dispositifs d'éclairage et/ou de signalisation sur des véhicules automobiles et s'intéresse plus particulièrement à un agencement d'un dispositif d'éclairage et/ou de signalisation sur un élément de carrosserie d'un véhicule automobile et notamment un agencement d'un projecteur sur un panneau de carrosserie avant d'un véhicule automobile.

Un projecteur de véhicule automobile comporte un boitier fermé sur sa face avant par une glace, ou vitre de protection, externe.

Dans le cas de figure où le projecteur est monté sur un panneau de carrosserie avant, et que le panneau est fixé sur un élément tubulaire d'un véhicule comportant un châssis tubulaire, il est courant d'utiliser une pièce intermédiaire de liaison, une tôle de liaison, permettant la fixation du boitier du projecteur sur le châssis tubulaire. Le panneau délimite une ouverture au travers de laquelle passe la glace du projecteur.

La problématique d'un tel agencement est que la dispersion de la distance entre la tôle de liaison et le panneau de carrosserie est élevée et il devient très difficile de positionner, centrer et orienter, précisément la glace du projecteur au travers de l'ouverture du panneau.

L'invention a donc notamment pour but de pallier cet inconvénient en proposant un agencement permettant de positionner le projecteur sur le panneau de carrosserie avec un centrage optimal et une orientation optimale de la glace du projecteur dans l'ouverture et ce, quelle que soit la forme de la glace.

A cet effet, l'invention a pour premier objet un agencement d'un dispositif d'éclairage et/ou de signalisation à l'arrière d'un panneau de carrosserie d'un véhicule automobile, ledit panneau délimitant une ouverture en regard de laquelle est positionné le dispositif ; ledit dispositif comportant un boitier fixé sur la face arrière du panneau et une glace de forme géométrique déterminée fermant le boitier et s'étendant au travers de ladite ouverture présentant la même forme géométrique déterminée ; ledit agencement comportant en outre au moins trois liaisons rotules réglables, agencées entre le boitier et la face arrière du panneau autour de l'ouverture ; chacune des trois liaisons rotule comporte une tige cylindrique de liaison se terminant à une première extrémité, par une tête sphérique coopérant avec une cage maintenant à rotation la tête sphérique et définissant une liaison rotule entre le boitier et le panneau, et un système vis-écrou coopérant avec ladite liaison rotule permettant le réglage du positionnement de la glace au travers de l'ouverture depuis l'arrière du boitier.

Selon une caractéristique en lien avec des premiers moyens de réglage du positionnement, une deuxième extrémité de la tige de liaison, opposée à la première extrémité, coopère avec un fût de fixation, solidaire de la face arrière du panneau, et faisant saillie de la face arrière vers l'arrière du panneau, pour définir un système vis-écrou, et dans lequel la cage recevant la tête sphérique est montée dans un insert fixé dans le boitier pour définir une liaison rotule dans le boitier ; la dite tête sphérique comportant en outre une tige de réglage, solidaire de la tête sphérique, s'étendant depuis la tête sphérique vers l'arrière du boitier permettant le réglage du positionnement de la glace au travers de l'ouverture depuis l'arrière du boitier par rotation de ladite tige de réglage.

Selon une caractéristique en lien avec des deuxièmes moyens de réglage du positionnement, une deuxième extrémité de la tige, opposée à la première extrémité, est fixée dans un fût de fixation solidaire de la face arrière du panneau et faisant saillie de la face arrière vers l'arrière du panneau, et dans lequel la cage recevant la tête sphérique, est montée dans un insert rapporté vissé dans le boitier et qui définit avec le boitier un système vis-écrou ; l'insert comportant en outre une excroissance de réglage, solidaire de l'insert, s'étendant vers l'arrière du boitier permettant le réglage du positionnement de la glace au travers de l'ouverture depuis l'arrière du boitier par rotation de ladite excroissance de réglage.

Selon une caractéristique en lien avec des troisièmes moyens de réglage du positionnement, la cage recevant la tête sphérique définit un embout qui est clipsé sur un fût de fixation solidaire de la face arrière du panneau et faisant saillie de la face arrière vers l'arrière du panneau, et dans lequel la deuxième extrémité de la tige, opposée à la première, est filetée et vissée dans le boitier définissant avec le boitier une liaison vis-écrou ; la partie extrême de la deuxième extrémité fileté de la tige s'étendant à l'arrière du boitier, étant conformée pour permettre le réglage du positionnement de la glace au travers de l'ouverture depuis l'arrière du boitier par rotation de la tige.

Selon une autre caractéristique, le panneau est obtenu par moulage de matière thermoplastique ; lesdits fûts de fixation étant venus de matière par moulage avec le panneau.

Selon une autre caractéristique, chacune des trois liaisons rotules entre le boitier et la face arrière du panneau, définit un des sommets d'un triangle de réglage de positionnement.

L'invention a pour deuxième objet, un véhicule automobile comportant au moins un agencement tel que décrit ci-dessus.

L'invention a pour troisième objet, un véhicule automobile de type quadricycle comportant un châssis tubulaire mécano soudé sur lequel sont assemblés des panneaux de carrosseries en matériau plastique ; ledit véhicule comportant un agencement tel que décrit ci-dessus.

D'autres caractéristiques et avantages de l'invention apparaîtront à l'examen de la description détaillée ci-après, et du dessin annexé, sur lequel :
[Fig.1] illustre, dans une vue de face, un premier agencement selon l'invention, d'un projecteur à l'arrière d'un panneau de carrosserie de véhicule automobile ;
[Fig.2] illustre une vue en coupe transversale d'un deuxième agencement selon l'invention avant la fixation du projecteur sur le panneau de carrosserie du véhicule ;
[Fig.3] illustre une vue en coupe transversale du deuxième agencement selon l'invention après fixation du projecteur sur le panneau de carrosserie du véhicule ;
[Fig.4] illustre une vue en coupe transversale du deuxième agencement selon l'invention après réglage du positionnement du projecteur sur le panneau de carrosserie du véhicule ;
[Fig.5] illustre une vue en coupe transversale de premiers moyens de réglage du deuxième agencement selon l'invention.
[Fig.6] illustre une vue en coupe transversale de deuxièmes moyens de réglage du deuxième agencement selon l'invention ; et
[Fig.7] illustre une vue en coupe transversale de troisièmes moyens de réglage d'une variante du deuxième agencement selon l'invention.

Les éléments représentés sur les figures, sont orientés à l'intérieur d'un même repère orthonormé XYZ et les éléments identiques sont désignés par les mêmes références alphanumériques.

Pour cela et sauf précision contraire, il est fait référence au repère orthonormé XYZ pour identifier les directions d'extension de l'agencement considéré monté sur le véhicule, et les notions relatives associées, dont une direction longitudinale (selon X), une direction transversale (selon Y) et une direction verticale (selon Z). La direction longitudinale X s'étend entre l'avant et l'arrière du véhicule, la direction transversale Y s'étend entre les côtés latéraux droit et gauche du véhicule identifiés par rapport au conducteur en station de conduite du véhicule, et la direction verticale Z définit l'extension du véhicule en élévation depuis son plan de roulage au sol. Par suite, les notions relatives avant et arrière sont identifiées longitudinalement, la notion latérale et les notions relatives droit et gauche sont identifiées transversalement, les notions comme supérieur et inférieur ou autres notions relatives apparentées comme bas et haut, ... sont définies verticalement par rapport au plan de roulage du véhicule au sol.

La présente invention se base sur un agencement comportant au moins trois liaisons à rotule, désignées également par liaisons rotulées ou encore par liaisons rotule, liant le boitier d'un projecteur à la face arrière d'un panneau de carrosserie équipant la face avant d'un véhicule automobile ; chaque liaison rotule disposant en outre d'un moyen de réglage permettant d'agir sur le positionnement de la glace au travers de l'ouverture du panneau pour un centrage optimal et une orientation optimale de la glace dans l'ouverture et ce, quelle que soit la forme géométrique de la glace : ronde, carrée, triangulaire, en losange, en croix, etc. ; la forme géométrique de l'ouverture étant adaptée à celle de la glace.

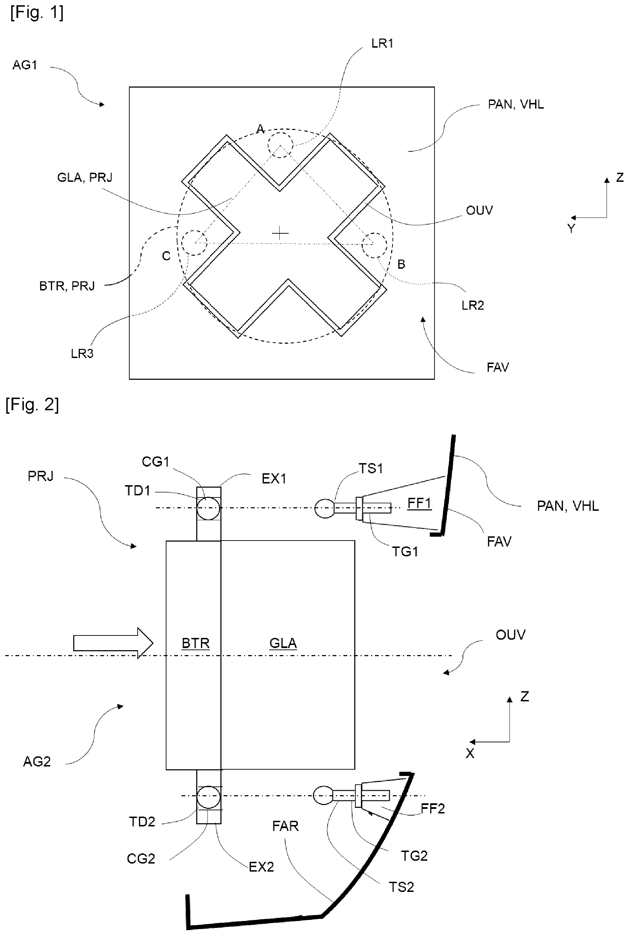

La figure 1 illustre un premier agencement AG1 selon l'invention vu de la face avant FAV d'une partie d'un panneau de carrosserie avant PAN d'un véhicule automobile VHL. Par face avant FAV, on considère la face du panneau de carrosserie avant PAN qui est visible sur la face avant du véhicule VHL.

Le panneau PAN délimite, dans l'exemple considéré, une ouverture OUV présentant une forme géométrique en croix. L'ouverture OUV est conformée pour laisser passer avec jeu, une glace GLA d'un dispositif d'éclairage et/ou de signalisation, par exemple une glace GLA d'un projecteur PRJ du véhicule automobile VHL. La glace GLA présente une même forme géométrique en croix. La glace GLA ferme un boitier BTR qui est fixé sur la face arrière (non visible sur cette figure) du panneau PAN. Le boitier BTR est représenté à l'arrière du panneau PAN, par un cercle en trait interrompu. Le boitier BTR peut prendre différentes formes, et notamment la même forme géométrique que la glace GLA.

Le boitier BTR est fixé sur la face arrière du panneau PAN par trois liaisons rotule réglables LR1, LR2 et LR3. Les trois liaisons LR1, LR2 et LR3 sont repérées respectivement et schématiquement par trois cercles en trait interrompu.

Elles sont agencées autour de l'ouverture OUV de manière à définir respectivement des sommets d'un triangle de réglage ABC. Ce triangle ABC est adapté en fonction de la forme géométrique de l'ouverture OUV pour permettre un régale optimal du positionnement de la glace GLA au travers de l'ouverture OUV.

Chacune de ces trois liaisons rotule LR1, LR2 ou LR3 est réglable indépendamment l'une des autres suivant une direction passant par un plan perpendiculaire au plan du panneau PAN (plan passant sensiblement dans un plan YZ, dans le repère XYZ) et en étant sensiblement parallèle à l'axe longitudinal, (selon X) du véhicule VHL quand le panneau PAN est monté sur le véhicule VHL.

Le panneau PAN est par exemple obtenu par injection d'une matière thermoplastique dans un moule, comme par exemple du polypropylène ou du polyamide chargé avec des fibres de verre.

La figure 2 illustre une vue en coupe transversale d'un deuxième agencement AG2 selon l'invention d'un projecteur PRJ, par exemple de forme générale cylindrique : boitier BTR cylindrique et glace GLA cylindrique (forme géométrique choisie ici comme exemple pour la simplification du dessin), au moment du montage du projecteur PRJ sur la face arrière FAR du panneau PAN.

Le projecteur PRJ est amené en regard de l'ouverture OUV par l'arrière du panneau PAN suivant le sens de la flèche (selon X). La glace GLA est en regard et sensiblement centrée par rapport à l'ouverture OUV.

Le boitier BTR comporte des excroissances EX1, EX2 venues de matière avec le boitier BTR s'étendant latéralement vers l'extérieur du boiter BTR. Ces excroissances sont au nombre de trois (une par liaison rotule) mais deux seulement EX1, EX2 sont visibles sur la figure 2. Elles supportent chacune une cage CG1, CG2 par exemple montée en force dans un trou débouchant TD1, TD2 aménagé dans l'excroissance EX1, EX2. Chaque cage CG1, CG2 est destinée à coopérer avec une tête sphérique TS1, TS2 montée à une première extrémité d'une tige TG1, TG2 s'étendant en saillie de la partie de la face arrière FAR du panneau PAN en direction (selon X) de la cage correspondante CG1, CG2. La deuxième extrémité de la tige TG1, TG2, opposée à la première extrémité, est fixée sur la face arrière FAR du panneau PAN par l'intermédiaire d'un fût de fixation FF1, FF2. Les fûts de fixation FF1, FF2 sont venus de matière avec la face arrière FAR du panneau PAN.

Les cages CG1, CG2 et les têtes sphérique TS1, TS2 reçues respectivement dans les cages CG1, CG2 définissent des première et deuxième liaisons rotule LR1, LR2. La troisième liaison « LR3 », non visible, comporte des éléments analogues.

Les cages CG1, CG2 sont ici représentées schématiquement. Elles sont montées dans des inserts ou forment elles-mêmes des inserts, non représentés, qui sont montés en force dans les trous débouchant TD1, TD2 des excroissances EX1, EX2, ou surmoulées dans les trous débouchant TD1, TD2. Les cages CG1, CG2 sont en matériau plastique et disposent d'une ouverture apte à subir un écartement pour pouvoir recevoir la tête sphérique TS1, TS2 et la maintenir ensuite en position serrée dans la cage CG1, CG2 pour assurer la fixation du projecteur PRJ sur l'arrière du panneau PAN.

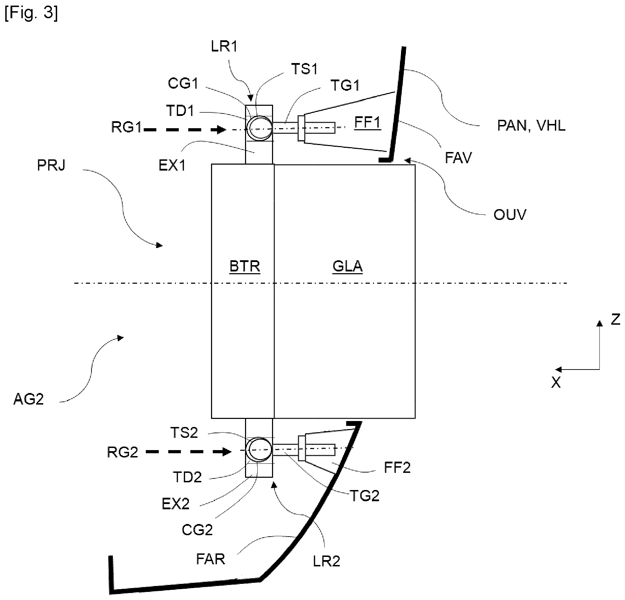

La figure 3, illustre le même deuxième agencement AG2 dans une première position de montage du projecteur PRJ sur la face arrière FAR du panneau PAN

La glace GLA traverse l'ouverture OUV en étant prépositionnée dans l'ouverture OUV avec une certaine orientation.

Pour pouvoir positionner précisément la glace GLA (centrage et orientation déterminés) au travers de l'ouverture OUV, des accès RG1, RG2 pour le réglage des liaisons rotule LR1, LR2 sont prévus par l'arrière du boitier BTR et plus précisément à l'arrière des excroissances EX1, EX2 dans l'alignement des axes des tiges TG1, TG2, matérialisés par des traits mixtes, sensiblement suivant X. Ces accès RG1, RG2 sont matérialisés respectivement par des flèches en trait interrompu.

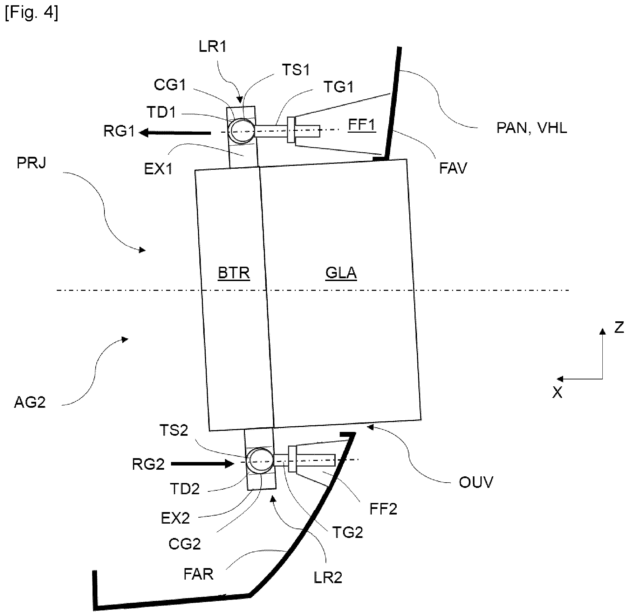

La figure 4, illustre le même deuxième agencement AG2 dans une deuxième position de montage, dans laquelle le projecteur PRJ a subi un réglage de son positionnement (centrage et orientation) dans l'ouverture OUV. Ce réglage est réalisé par les accès RG1, RG2, prévus à l'arrière des excroissances EX1, EX2 sur les trois liaisons rotule LR1, LR2 et LR3. (Les accès et excroissance de la troisième liaison rotule LR3 ne sont pas visibles sur la figure).

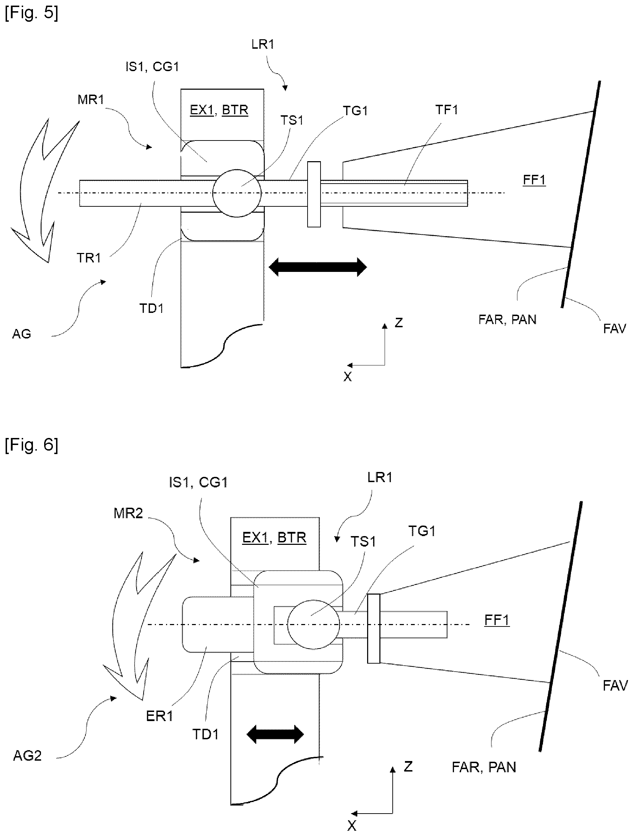

La figure 5 illustre un premier mode de réalisation de moyens de réglage MR1 pour chacune des trois liaisons rotule LR1, LR2, LR3 du deuxième agencement AG2 (figures 2, 3 et 4).

Les moyens de réglage MR1 comportent un insert IS1 surmoulé, ou monté à force, dans un trou débouchant TD1 aménagé dans l'excroissance EX1 du boitier BTR, et donc fixe par rapport au boitier BTR. Il est conformé pour définir la cage CG1, recevant la tête sphérique TS1 supportée par la première extrémité de la tige TG1 de la liaison rotule LR1. Le trou débouchant TD1 est aménagé dans l'excroissance EX1 de manière à être sensiblement aligné en regard du fût de fixation FF1 quand le boitier BTR est fixé sur la face arrière FAR du panneau PAN.

La deuxième extrémité de la tige TG1 est par ailleurs conformée pour définir une tige filetée TF1 qui est vissée dans le fût de fixation FF1 solidaire de la face arrière FAR du panneau PAN.

La tête sphérique TS1 comporte par ailleurs, une protubérance définissant une tige cylindrique de réglage TR1, solidaire de la tête sphérique TS1 et s'étendant à partir de la tête sphérique TS1 dans une direction diamétralement opposée à la direction de la première extrémité de la tige TG1, sensiblement horizontale (selon X). Cette tige de réglage TR1 peut être une simple tige de réglage manuelle ou nécessitant un outil, par exemple un tournevis ou une clé, non représentés, auquel cas la partie d'extrémité de la tige de réglage TR1 est conformée pour recevoir l'outil de réglage : tournevis ou clé.

Le réglage de la liaison rotule LR1 s'effectue par rotation de la tige TR1 autour de l'axe de la tige TR1 (selon X) matérialisé par un trait mixte. Une rotation, matérialisée sur la figure par une flèche simple, dans un sens, permet le vissage de la tige TG1 dans le fût FF1 et une rotation dans l'autre sens permet le dévissage de la tige TG1. Ce qui entraine le déplacement de la tête sphérique TS1 respectivement dans un sens ou dans l'autre, suivant une direction sensiblement horizontale (selon X), déplacement qui est matérialisé sur la figure par une flèche double.

Ce déplacement permet, grâce à l'articulation formée par la liaison rotule LR1, le basculement du boitier BTR et donc de la glace GLA dans l'ouverture OUV. Le réglage combiné des autres liaisons rotule LR2, LR3, utilisant le même principe, permet d'ajuster finement le positionnement (centrage et orientation) de la glace GLA dans l'ouverture OUV.

Dans ce premier mode de réalisation, les moyens de réglage MR1 mettent en œuvre une liaison rotule (insert-cage IS1, CG1 fixe et tête sphérique TS1) et une liaison vis-écrou (tige fileté TF1 et fut de fixation taraudé FF1).

La figure 6 illustre un deuxième mode de réalisation des moyens de réglage MR2 pour chacune des trois liaisons rotule LR1, LR2, LR3 du deuxième agencement AG2.

Dans ce deuxième mode de réalisation, les moyen de réglage MR2 comportent toujours un insert IS1 mais qui est ici monté vissé dans le trou débouchant TD1 qui est taraudé, aménagé dans l'excroissance EX1 du boitier BTR. L'insert IS1 est donc mobile en translation par rapport au boitier BTR. Il est conformé pour définir la cage CG1, recevant la tête sphérique TS1 supportée par la première extrémité de la tige TG1 de la liaison rotule LR1.

La deuxième extrémité de la tige TG1 est ici fixée dans le fût de fixation FF1, solidaire de la face arrière du panneau PAN. La tige TG1 est donc fixe par rapport au panneau PAN

La cage CG1 comporte par ailleurs, une protubérance définissant une tige cylindrique de réglage ER1, solidaire de la cage CG1 et s'étendant à partir de cage CG1 dans une direction diamétralement opposée à la direction de la première extrémité de la tige TG1, sensiblement horizontale (selon X). Cette tige de réglage TR1 peut être une simple tige de réglage manuelle ou nécessitant un outil, par exemple un tournevis ou une clé, non représentés, auquel cas la partie d'extrémité de la tige de réglage TR1 est conformée pour recevoir l'outil de réglage : tournevis ou clé.

**.** Le réglage s'effectue par rotation de la tige ER1 autour de l'axe de la tige TR1 (selon X) matérialisé par un trait mixte. La rotation est matérialisée, sur la figure, par une flèche simple. Une rotation dans un sens permet le visage de la cage-insert CG1, IS1 dans l'excroissance EX1, et une rotation dans l'autre sens permet le dévissage de la cage-insert CG1, IS1. Ce qui entraine le déplacement de l'insert IS1 respectivement dans un sens ou dans l'autre, suivant une direction sensiblement horizontale (selon X), déplacement qui est matérialisé, sur la figure, par une flèche double.

Ce déplacement permet, grâce à l'articulation formée par la liaison rotule LR1, le basculement du boitier BTR et donc de la glace GLA dans l'ouverture OUV. Le réglage combiné des autres liaisons rotule LR2, LR3, utilisant le même principe, permet d'ajuster finement le positionnement (centrage et orientation) de la glace GLA dans l'ouverture OUV.

Comme dans le premier mode de réalisation, les moyens de réglage MR2 mettent en œuvre une liaison rotule (insert-cage mobile IS1, CG1 et tête sphérique TS1) et une liaison vis-écrou (insert fileté IS1 et trou débouchant taraudé TD1 de l'excroissance EX1).

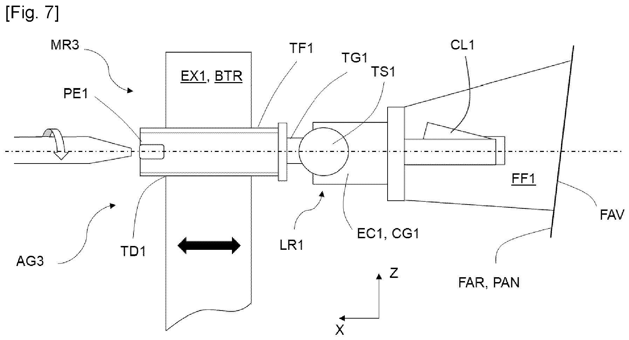

La figure 7 illustre une variante AG3 du deuxième agencement AG3 dans laquelle la liaison rotule n'est plus du côté du boitier BTR, mais du côté du panneau PAN.

Dans cette variante, la deuxième extrémité TF1 de la tige TG1, est filetée et vissée dans le trou débouchant taraudé TD1 de l'excroissance EX1 du boitier BTR.

La cage CG1 recevant la tête sphérique TS1, définit un embout EC1 qui est clipsé par des moyens de clipsage CL1, dans le fût de fixation FF1 solidaire de la face arrière FAR du panneau PAN.

L'embout EC1 ainsi clipsé dans le fût de fixation FF1, permet un démontage plus facile du boitier BTR permettant une réparabilité plus aisée en cas de casse du projecteur PRJ.

La partie extrême PE1 de l'extrémité filetée TF1 de la tige TG1, est conformée pour recevoir un outil de réglage : tournevis ou clé, ici une lame de tournevis TNV.

Le réglage s'effectue par rotation de la tige TG1 autour de l'axe de la tige TG1 (selon X), matérialisé par un trait mixte. La rotation est matérialisée sur la figure par une flèche simple. Une rotation dans un sens permet le vissage de la tige TG1 dans l'excroissance EX1 et une rotation dans l'autre sens permet le dévissage de la tige TG1. Ce qui entraine le déplacement de la tige TG1 et la tête sphérique TS1 en translation respectivement dans un sens ou dans l'autre, suivant une direction sensiblement horizontale (selon X), déplacement qui est matérialisé sur la figure par une flèche double.

Ce déplacement permet, grâce à l'articulation formée par la liaison rotule LR1, côte panneau PAN, le basculement du boitier BTR et donc de la glace GLA dans l'ouverture OUV. Le réglage combiné des autres liaisons rotule LR2, LR3, utilisant le même principe, permet d'ajuster finement le positionnement (centrage et orientation) de la glace GLA dans l'ouverture OUV.

Dans cette variante, AG3, les moyens de réglage MR3 mettent en œuvre une liaison rotule LR1 (embout-cage fixe EC1, CG1 et tête sphérique TS1) et une liaison vis-écrou (partie filetée TF1 de la tige TF1 et trou débouchant taraudé TD1 de l'excroissance EX1).

De tels agencements selon l'invention sont particulièrement adaptés pour des véhicules automobiles de type quadricycle, construits à partir d'un châssis à structure tubulaire mécano-soudée sur lequel on vient rapporter des panneaux de carrosserie en général en matériau plastique.

## Revendications

1. Agencement (AG1 ; AG2 ; AG3) d'un dispositif d'éclairage et/ou de signalisation (PRJ) à l'arrière d'un panneau de carrosserie (PAN) d'un véhicule automobile (VHL), ledit panneau (PAN) délimitant une ouverture (OUV) en regard de laquelle est positionné le dispositif (PRJ) ; ledit dispositif (PRJ) comportant un boitier (BTR) fixé sur la face arrière (FAR) du panneau (PAN) et une glace (GLA) de forme géométrique déterminée, fermant le boitier (BTR) et s'étendant au travers de ladite ouverture (OUV) présentant la même forme géométrique déterminée ; ledit agencement (AG1 ; AG2 ; AG3) comportant en outre au moins trois liaisons rotules réglables (LR1, LR2, LR3), agencées entre le boitier (BTR) et la face arrière (FAR) du panneau (PAN) autour de l'ouverture (OUV) ; chacune des trois liaisons rotule (LR1, LR2, LR3) comporte une tige cylindrique de liaison (TG1) se terminant à une première extrémité, par une tête sphérique (TS1) coopérant avec une cage (CG1) maintenant à rotation la tête sphérique (TS1) et définissant une liaison rotule (LR1) entre le boitier (BTR) et le panneau (PAN), et un système vis-écrou coopérant avec ladite liaison rotule (LR1) permettant le réglage du positionnement de la glace (GLA) au travers de l'ouverture (OUV) depuis l'arrière du boitier (BTR).

2. Agencement (AG2) selon la revendication précédente, dans lequel une deuxième extrémité (TF1) de la tige de liaison (TG1), opposée à la première extrémité, coopère avec un fût de fixation (FF1), solidaire de la face arrière (FAR) du panneau (PAN), et faisant saillie de la face arrière (FAR) vers l'arrière du panneau (PAN), pour définir un système vis-écrou, et dans lequel la cage (CG1) recevant la tête sphérique (TS1) est montée dans un insert (IS1) fixé dans le boitier (EX1, BTR) pour définir une liaison rotule (LR1) dans le boitier (BTR) ; la dite tête sphérique (TS1) comportant en outre une tige de réglage (TR1), solidaire de la tête sphérique (TS1), s'étendant depuis la tête sphérique (TS1) vers l'arrière du boitier (BTR) permettant le réglage du positionnement de la glace (GLA) au travers de l'ouverture (OUV) depuis l'arrière du boitier (BTR) par rotation de ladite tige de réglage (TR1).

3. Agencement (AG2) selon la revendication 1, dans lequel une deuxième extrémité de la tige (TG1), opposée à la première extrémité, est fixée dans un fût de fixation (FF1) solidaire de la face arrière (FAR) du panneau (PAN) et faisant saillie de la face arrière (FAR) vers l'arrière du panneau (PAN), et dans lequel la cage (CG1) recevant la tête sphérique (TS1), est montée dans un insert (IS1) rapporté vissé dans le boitier (BTR) et qui définit avec le boitier (BTR) un système vis-écrou ; l'insert (IS1) comportant en outre une excroissance de réglage (ER1), solidaire de l'insert (IS1), s'étendant vers l'arrière du boitier (BTR) permettant le réglage du positionnement de la glace (GLA) au travers de l'ouverture (OUV) depuis l'arrière du boitier (BTR) par rotation de ladite excroissance de réglage (ER1).

4. Agencement (AG3) selon la revendication 1, dans lequel la cage (CG1) recevant la tête sphérique (TS1) définit un embout (EC1) qui est clipsé sur un fût de fixation (FF1) solidaire de la face arrière (FAR) du panneau (PAN) et faisant saillie de la face arrière (FAR) vers l'arrière du panneau (PAN), et dans lequel la deuxième extrémité (TF1) de la tige (TG1), opposée à la première, est filetée et vissée dans le boitier (BTR) définissant avec le boitier (BTR) une liaison vis-écrou ; la partie extrême (PE1) de la deuxième extrémité fileté (TF1) de la tige (TG1) s'étendant à l'arrière du boitier (BTR), étant conformée pour permettre le réglage du positionnement de la glace (GLA) au travers de l'ouverture (OUV) depuis l'arrière du boitier (BTR) par rotation de la tige (TG1).

5. Agencement (AG1 ; AG2 ; AG3) selon l'une quelconque des revendications précédentes, dans lequel le panneau (PAN) est obtenu par moulage de matière thermoplastique ; lesdits fûts de fixation (FF1) étant venus de matière par moulage avec le panneau (PAN).

6. Agencement (AG1 ; AG2 ; AG3) selon l'une quelconque des revendications précédentes, dans laquelle chacune des trois liaisons rotules (LR1, LR2, LR3) entre le boitier (BTR) et la face arrière (FAR) du panneau (PAN), définit un des sommets (A, B, C) d'un triangle de réglage de positionnement (ABC).

7. Véhicule automobile (VHL) comportant au moins un agencement selon l'une quelconque des revendications précédentes.

8. Véhicule automobile (VHL) de type quadricycle comportant un châssis tubulaire mécano soudé sur lequel sont assemblés des panneaux de carrosseries en matériau plastique ; ledit véhicule (VHL) comportant un agencement selon l'une des revendications 1 à 6.
